# DEMANDE DE BREVET EUROPEEN

(11) **EP 4 847 387 A1**
(43) Date de publication de la demande: **02.12.2026**
(21) Numéro de dépôt: 26181181.4
(22) Date de dépôt: 26.05.2026
(51) Int. Cl.: B64D 27/355

(54) **AERONEF COMPRENANT UNE ARCHITECTURE SPÉCIFIQUE POUR LA DISTRIBUTION DE COMPOSITION DE FUEL ET D'ÉLECTRICITÉ**

(30) Priorité: 30.05.2025 FR 2505856
(71) Demandeur: Airbus (S.A.S.), 31700 Blagnac (FR)
(72) Inventeur: YADAV, Jitendra, 31700 Blagnac (FR); YBANEZ, Ludovic, 31700 Blagnac (FR); BOUKAYOUA, Souhaib, 31700 Blagnac (FR); ROUQUETTE, Jean-François, 31700 Blagnac (FR)
(74) Mandataire: BCF Global

(57) **Abrégé**

L'invention concerne un a Aéronef, comprenant au moins une aile munie d'au moins une nacelle (6-1-L, 6-2-L, 6-1-R, 6-2-R), et un fuselage, l'aéronef comprenant un système de production d'électricité (2) et le fuselage comprenant au moins un réservoir (3-1, 3-2) de stockage de composition de fuel pour alimenter ledit système de production d'électricité (2), ledit au moins une nacelle (6-1-L, 6-2-L, 6-1-R, 6-2-R) comprenant une unité de propulsion électrique (11-1-L, 11-2-L, 11-1-R, 11-2-R) comportant une unité de contrôle moteur (MCU) et un moteur électrique (M) conformé pour être alimenté électriquement par le système de production d'électricité pour produire une poussée, le système de production d'électricité (2) comprenant un dispositif de production d'électricité (4-1-L, 4-2-L, 4-1-R, 4-2-R) dans ledit au moins une nacelle (6-1-L, 6-2-L, 6-1-R, 6-2-R) et un dispositif de production d'électricité (4-F-L, 4-F-R) dans ledit fuselage (7).

## Description

### Domaine technique

La présente invention se rapporte à un aéronef, par exemple à propulsion à dihydrogène, comportant une architecture spécifique pour la distribution de composition de fuel et d'électricité.

### Technique antérieure

Dans un effort de réduction de l'impact carbone dû à l'aviation, la Titulaire a développé des projets d'aéronefs dont les moteurs fonctionnent avec une propulsion à dihydrogène. Pour améliorer la compétitivité de ce type de propulsion, il s'avère primordial de mettre au point des équipements spécifiques.

C'est dans ce contexte que la présente invention vient améliorer l'évolution actuelle des systèmes de propulsion conventionnels.

### Résumé

A cet effet, il est proposé un aéronef, comprenant au moins une aile munie d'au moins une nacelle, et un fuselage, l'aéronef comprenant un système de production d'électricité et le fuselage comprenant au moins un réservoir de stockage de composition de fuel pour alimenter ledit système de production d'électricité, ledit au moins une nacelle comprenant une unité de propulsion électrique comportant une unité de contrôle moteur et un moteur électrique conformé pour être alimenté électriquement par le système de production d'électricité pour produire une poussée, le système de production d'électricité comprenant un dispositif de production d'électricité dans ledit au moins une nacelle et un dispositif de production d'électricité dans ledit fuselage.

Grâce à l'architecture selon la présente technologie, il est possible de répartir la production d'énergie électrique entre le fuselage et les nacelles, ce qui permet une optimisation de la répartition de la masse de composition de fuel. De surcroît, la redirection de la production d'une partie de l'énergie électrique dans le fuselage permet de réduire la taille des nacelles et de réduire les contraintes sur la production d'énergie, et d'améliorer la sécurité de l'aéronef.

Selon un autre aspect, le moteur électrique est supraconducteur.

Selon un autre aspect, l'unité de contrôle du moteur électrique supraconducteur est cryogénique.

Selon un autre aspect, chaque dispositif de production d'électricité est une pile à combustible, la composition de fuel étant du dihydrogène.

Selon un autre aspect, l'aéronef comprend une liaison électrique supraconductrice pour fournir de l'électricité entre la pile à combustible et l'unité de contrôle cryogénique.

Selon un autre aspect, le système de production d'électricité comprend au moins une pile à combustible.

Selon un autre aspect, l'aéronef comprend une boucle de conditionnement de la composition de fuel en amont de l'un des dispositifs de production d'électricité, ladite boucle de conditionnement comportant un échangeur entre la composition de fuel et un autre fluide, dit fluide calorifique.

Selon un autre aspect, l'aéronef comprend une distribution électrique comportant au moins un câble électrique entre le système de production d'énergie et l'unité de propulsion électrique, ladite distribution électrique comportant un moyen de maintien dudit câble à une température inférieure ou égale à une température cible.

Selon un autre aspect, le moyen de maintien du câble à une température inférieure ou égale à une température cible et la boucle de conditionnement de la composition de fuel sont reliés, de sorte qu'une chaleur dissipée dans le câble électrique contribue au conditionnement de la composition de fuel.

Selon un autre aspect, l'aéronef comprend une boucle d'évacuation de chaleur hors d'au moins un dispositif de production d'électricité, ladite boucle d'évacuation de chaleur comprenant une entrée d'air et un échangeur de chaleur entre l'air et un autre fluide, dit fluide de refroidissement.

Selon un autre aspect, l'aéronef comprend deux nacelles, chaque nacelle comprenant une unité de propulsion électrique comportant une unité de contrôle moteur et un moteur électrique conformé pour être alimenté électriquement par le système de production d'électricité pour produire une poussée, et un dispositif de production d'électricité dédié à ladite unité de propulsion électrique, le fuselage comprenant au moins un dispositif de production d'électricité relié à chacune des desdites unités de propulsion électrique des deux nacelles.

Selon un autre aspect, l'aéronef comprend deux nacelles, chaque nacelle comprenant une unité de propulsion électrique comportant une unité de contrôle moteur et un moteur électrique conformé pour être alimenté électriquement par le système de production d'électricité pour produire une poussée, et un dispositif de production d'électricité dédié à ladite unité de propulsion électrique, le fuselage comprenant au moins un dispositif de production d'électricité relié à chacune des desdites unités de propulsion électrique des deux nacelles.

### Brève description des dessins

D'autres caractéristiques, détails et avantages apparaîtront à la lecture de la description détaillée ci-après, et à l'analyse des dessins annexés, sur lesquels :
**Fig. 1**

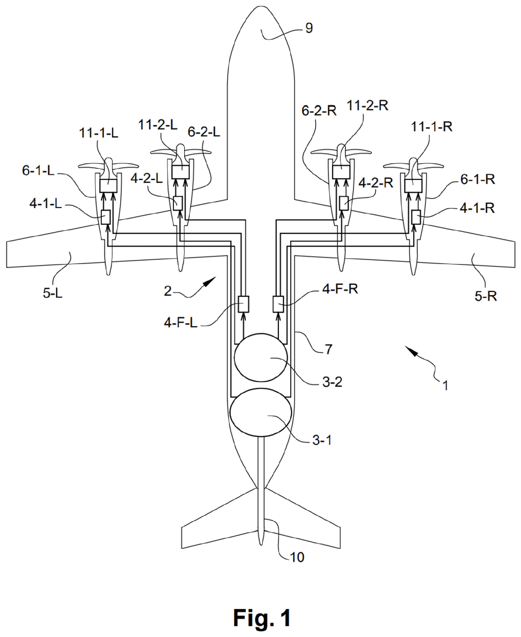

   [Fig. 1] est une vue schématique en perspective d'un aéronef équipé d'une architecture selon un mode de réalisation de la présente invention.
**Fig. 2**

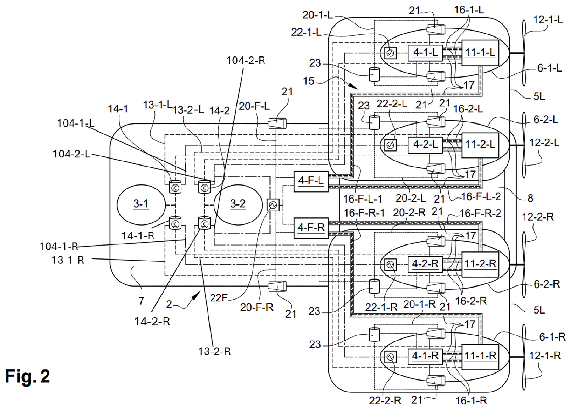

   [Fig. 2] est un schéma de haut niveau d'une architecture fonctionnelle simplifiée de l'architecture de la figure 1.

### Description des modes de réalisation

Les exemples et les conditions associées détaillés ici sont principalement destinés à aider le lecteur à comprendre les principes de la présente invention et non à limiter sa portée à ces exemples et conditions spécifiques. On comprendra que la personne du métier peut concevoir divers agencements qui, bien qu'ils ne soient pas explicitement décrits ou représentés ici, incarnent néanmoins les principes de la présente invention et sont inclus dans son esprit et sa portée.

En outre, pour faciliter la compréhension, la description suivante peut décrire des mises en oeuvre relativement simplifiées de la présente invention. Comme la personne du métier le comprend, d'autres mises en oeuvre de la présente invention peuvent être d'une plus grande complexité.

Dans certains cas, des exemples de modifications de la présente invention peuvent également être présentés. Ceci est fait simplement comme une aide à la compréhension, et, à nouveau pas pour définir la portée ou établir les limites de la présente invention. Ces modifications ne sont pas une liste exhaustive, et la personne du métier pourra apporter d'autres modifications tout en restant dans le cadre de la présente invention.

En outre, toutes les déclarations ci-après relatives aux principes, aspects et mises en oeuvre de la présente invention, ainsi que les exemples spécifiques de celle-ci, visent à englober à la fois les équivalents structurels et fonctionnels de celle-ci, qu'ils soient actuellement connus ou développés à l'avenir.

Comme visible sur les figures, l'invention a pour objet un aéronef 1 avec ou sans pilote présentant tout type de configuration.

Dans la description qui suit, l'aéronef est à propulsion électrique. Par propulsion électrique, on entend de type AEA (pour « All Electric Aircraft » en anglais, complètement électrique), HEA (pour « Hybrid Electric Aircraft », hybride) ou MEA (pour « More Electric Aircraft »). En d'autres termes, l'aéronef 1 comprend un système de production d'électricité, référencé 2 sur les figures.

L'aéronef 1 comprend également au moins un réservoir 3 de stockage de composition de fuel pour alimenter le système de production d'électricité 2. Dans la description qui suit, la composition de fuel est du dihydrogène. Néanmoins, l'invention n'est pas limitée au dihydrogène, et d'autres compositions de fuel sont envisageables, comme le méthane par exemple.

Dans la description qui suit, le système de production d'électricité 2 comprend au moins un dispositif de production d'électricité 4, comme il sera détaillé. Dans les modes de réalisation décrits, chaque dispositif de production d'électricité est une pile à combustible. Néanmoins, l'invention n'est pas limitée à ce type de système de production d'électricité et plus largement, l'invention couvre différents types de systèmes de production d'électricité (conventionnels et/ou non conventionnels) tels que des batteries, ou des types de moteurs alimentant des turbines électriques/turbines à gaz qui peuvent brûler n'importe quel carburant, y compris le dihydrogène liquide, par exemple.

L'aéronef 1 comprend au moins une aile 5, munie d'au moins une nacelle 6, au sens du mot « pod » en anglais, et un fuselage 7. Ainsi, le terme nacelle doit être compris comme tout contenant qui porte un moteur, et, éventuellement, d'autres composants, comme par exemple un dispositif de production d'électricité.

Sur les figures, on a illustré une première aile 5-L (pour « left », c'est-à-dire « gauche », en anglais) solidaire du fuselage 7 par un caisson de voilure 8, et une deuxième aile 5-R
(pour « right », c'est-à-dire « droite », en anglais) solidaire du fuselage 7 par le caisson de voilure 8.

L'aéronef 1 s'étend entre un cockpit 9 et une queue 10. L'aile 5-L est disposée à gauche pour un observateur placé derrière la queue 10, tandis que l'aile 5-R est disposée à droite.

Sur les figures, chacune des ailes 5-L, 5-R est munie de deux nacelles, respectivement référencés 6-1-L, 6-2-L et 6-1-R, 6-2-R. Bien entendu, l'invention n'est pas limitée à cet agencement et le nombre de nacelle et leur répartition dépend du modèle de l'aéronef 1.

Le système de production d'électricité 2 comprend au moins un dispositif de production d'électricité 4 (4-1 ,4-2) dans une nacelle et au moins un dispositif de production d'électricité 4-F dans le fuselage 7. Comme également déjà indiqué, sur les figures, chaque dispositif de production d'électricité est une pile à combustible 4.

Comme visible sur les figures 1 et 2, le système de production d'électricité 2 comprend une pile à combustible dans chaque nacelle, référencée respectivement 4-1-L, 4-2-L, 4-1-R et 4-2-R, ainsi que deux piles à combustible dans le fuselage 7, référencées respectivement 4-F-L et 4-F-R. La pile à combustible 4-F-L est dédiée à l'aile gauche 5-L et la pile à combustible 4-F-R est dédiée à l'aile droite 5-R, comme il sera détaillé ultérieurement. Bien entendu, l'invention n'est pas limitée à cet agencement, et le nombre de piles à combustible, et leur répartition dépend du modèle de l'aéronef 1 et de la manière dont on souhaite optimiser la distribution électrique. Par exemple, la pile à combustible 4-F-L pourrait être dédiée aussi en partie à l'aile droite 5-R.

Comme également visible sur les figures 1 et 2, chaque nacelle 6-1-L, 6-2-L, 6-1-R et 6-2-R comprend une unité de propulsion électrique respective 11-1-L, 11-2-L, 11-1-R et 11-2-R. Chaque unité de propulsion électrique comporte une unité de contrôle moteur MCU (pour « motor control unit » en anglais) et un moteur électrique conformé pour être alimenté électriquement par le système de production d'électricité 2 pour produire une poussée. La pile à combustible 4-F-L, 4-F-R dédiée à une aile est dédiée dans la forme de réalisation illustrée aux deux moteurs de cette même aile. Mais comme vu précédemment, tout autre arrangement est possible.

Sur le mode de réalisation illustré, l'unité de propulsion électrique 11-1-L est alimentée électriquement par la pile à combustible 4-1-L dédiée de la nacelle 6-1-L et/ou la pile à combustible 4-F-L. L'unité de propulsion électrique 11-2-L est alimentée électriquement par la pile à combustible 4-2-L dédiée de la nacelle 6-2-L et/ou la pile à combustible 4-F-L. L'unité de propulsion électrique 11-1-R est alimentée électriquement par la pile à combustible 4-1-R dédiée de la nacelle 6-1-R et/ou la pile à combustible 4-F-R. Et, l'unité de propulsion électrique 11-2-R est alimentée électriquement par la pile à combustible 4-2-R dédiée de la nacelle 6-2-R et/ou la pile à combustible 4-F-R. Chaque unité de propulsion électrique 11-1-L, 11-2-L, 11-1-R, 11-2-R permet la mise en mouvement d'un propulseur tel qu'une hélice associée 12-1-L, 12-2-L, 12-1-R, 12-2-R.

Les piles à combustible sont par exemple de type à membrane échangeuse de protons, à basse température ou haute température, et/ou de type pile à combustible à oxyde solide (SOFC - pour « Solid Oxide Fuel Cell » en anglais).

Comme déjà indiqué, l'aéronef 1 comprend au moins un réservoir de stockage de dihydrogène. Au moins l'un des réservoirs de stockage est disposé dans le fuselage 7. Sur les figures, l'aéronef 1 comprend deux réservoirs 3-1, 3-2, tous les deux disposés dans le fuselage 7. Bien entendu, l'invention n'est pas limitée à cet agencement et le nombre de réservoirs dépend du modèle de l'aéronef 1. Sur les modes de réalisation décrits, les réservoirs 3-1, 3-2 contiennent du dihydrogène liquide, maintenu à une température Tf cryogénique inférieure ou égale à -253°C. On note que l'aéronef 1 est configuré pour que chacun des réservoirs 3-1 alimente en dihydrogène l'aile gauche 4-1-L et l'aile droite 4-1-R, et le réservoir 3-2 alimente de surcroît les piles à combustibles 4-F-L et 4-F-R, comme il sera détaillé. Bien entendu, l'invention n'est pas limitée à cet agencement de distribution de dihydrogène décrit ci-dessus, et on peut envisager une distribution différente du dihydrogène, selon l'aéronef 1.

Avantageusement, le moteur électrique de chaque unité de propulsion électrique est supraconducteur. Dans ce cas, de préférence, chaque unité de propulsion électrique, c'est-à-dire chaque moteur électrique et chaque unité de contrôle moteur, est à une température cryogénique.

Comme il ressort des figures, l'aéronef 1 comprend un circuit 104-1-L, 104-2-L, 104-1-R, 104-2-R de conditionnement du dihydrogène associé à chaque réservoir 3-1, 3-2, pour que le dihydrogène alimente chacune des piles à combustible aux conditions (température, état physique) adapté. Le circuit 104-1-L, 104-2-L, 104-1-R, 104-2-R comporte un échangeur de chaleur 14-1-L, 14-2-L, 14-1-R, 14-2-R entre le dihydrogène liquide et un autre fluide, dit fluide calorifique. Le fluide calorifique est par exemple de l'hélium en phase gazeuse, GHe, ou un autre type de cryogène (comme LN2 ou un mélange de gaz cryogéniques). L'échangeur de chaleur 14-1-L, 14-2-L, 14-1-R, 14-2-Rpermet avantageusement de réchauffer le dihydrogène liquide par le fluide calorifique et de faire subir un changement de phase liquide-gaz au dihydrogène liquide issu du réservoir associé 3-1, 3-2, par exemple, à une température cryogénique de phase gazeuse. Les circuits 104-1-L, 104-2-L, 104-1-R, 104-2-R font partie d'une boîte froide.

Sur la figure 2, la boucle 104-1-L assure la distribution du dihydrogène réchauffé, depuis la sortie de l'échangeur 14-1-L, jusqu'à la pile à combustible 4-2-L. La boucle 104-2-L assure la distribution du dihydrogène réchauffé, depuis la sortie de l'échangeur 14-2-L, jusqu'à la pile à combustible 4-1-L et les piles à combustible du fuselage 4-F-L et 4-F-R. La boucle 104-1-R assure la distribution du dihydrogène réchauffé, depuis la sortie de l'échangeur 14-1-R, jusqu'à la pile à combustible 4-2-R. La boucle 104-2-R assure la distribution du dihydrogène réchauffé, depuis la sortie de l'échangeur 14-2-R, jusqu'à la pile à combustible 4-1-R et les piles à combustible du fuselage 4-F-L et 4-F-R.

La boucle du fluide calorifique, par exemple GHe, est référencée 13-1-L, 13-2-L, 13-1-R, 13-2-R, 103-1-L, 103-2-R, 103-1-R, 103-2-R. La boucle GHe est configurée pour refroidir les composants cryogéniques et supraconducteurs dans la propulsion.

Comme il ressort également des figures, l'aéronef 1 comprend une distribution électrique 15 comportant au moins un câble électrique 16 entre le système de production d'énergie 2 et chaque unité de propulsion électrique. Sur les figures, la distribution électrique 15 comprend un ensemble 16-1-L de deux câbles électriques supraconducteurs dans la nacelle 6-1-L entre la pile à combustible 4-1-L et l'unité de propulsion électrique associée 11-1-L ; un ensemble 16-2-L de deux câbles électriques supraconducteurs dans la nacelle 6-2-L entre la pile à combustible 4-2-L et l'unité de propulsion électrique associée 11-2-L ; un ensemble 16-1-R de deux câbles électriques supraconducteurs dans la nacelle 6-1-R entre la pile à combustible 4-1-R et l'unité de propulsion électrique associée 11-1-R ; un ensemble 16-2-R de deux câbles électriques supraconducteurs dans la nacelle 6-2-R entre la pile à combustible 4-2-R et l'unité de propulsion électrique associée 11-2-R. La distribution électrique 15 comprend également un câble électrique supraconducteur 16-F-L-1 qui traverse le fuselage 7, l'aile gauche 5-L, et, éventuellement, le caisson de voilure 8, entre la pile à combustible 4-F-L et l'unité de propulsion électrique 11-1-L ; un câble électrique supraconducteur 16-F-L-2 qui traverse le fuselage 7, l'aile gauche 5-L, et, éventuellement, le caisson de voilure 8, entre la pile à combustible 4-F-L et l'unité de propulsion électrique 11-2-L ; un câble électrique supraconducteur 16-F-R-1 qui traverse le fuselage 7, l'aile droite 5-R, et, éventuellement, le caisson de voilure 8, entre la pile à combustible 4-F-R et l'unité de propulsion électrique 11-1-R ; un câble électrique supraconducteur 16-F-R-2 qui traverse le fuselage 7, l'aile droite 5-R, et, éventuellement, le caisson de voilure 8, entre la pile à combustible 4-F-R et l'unité de propulsion électrique 11-2-R. L'invention n'est bien entendu pas limitée à cet agencement.

La distribution électrique 15 comporte un moyen de maintien 17 de chaque câble à une température inférieure ou égale à une température cible par exemple une température cryogénique en dessous -150°C, autrement appelé cryostat. La température cible est avantageusement inférieure à la température de transition entre l'état supraconducteur et l'état normal du câble, de sorte à assurer que les câbles 16 sont maintenus dans leur état supraconducteur. Le cryostat comprend une boucle de refroidissement (non illustrée) dans laquelle circule un fluide de refroidissement, tel que GHe, et un échangeur de chaleur entre le GHe et chaque câble supraconducteur.

Le moyen 17 de maintien des câbles à température supraconductrice et la boucle de conditionnement 13-1-L, 13-2-L, 13-1-R, 13-2-R, 103-1-L, 103-2-L, 103-1-R, 103-2-R sont reliés, de sorte qu'une chaleur dissipée dans le câble électrique contribue au conditionnement du dihydrogène avant son entrée dans les piles à combustible, comme il sera détaillé.

L'aéronef 1 comprend également une boucle 20 d'évacuation de chaleur hors d'au moins un dispositif de production d'électricité, ladite boucle d'évacuation de chaleur comprenant une entrée d'air et un échangeur de chaleur entre l'air et un autre fluide, dit fluide de refroidissement. Sur les figures, la boucle d'évacuation comprend une boucle de refroidissement associée à chaque pile à combustible. On a référencé 20-1-L la boucle associée à la pile à combustible 4-1-L, 20-2-L la boucle associée à la pile à combustible 4-2-L, 20-1-R la boucle associée à la pile à combustible 4-1-R, 20-2-R la boucle associée à la pile à combustible 4-2-R, 20-F-L la boucle associée à la pile à combustible 4-F-L, et 20-F-R la boucle associée à la pile à combustible 4-F-R. Chaque boucle 20-1-L, 20-2-L, 20-1-R, 20-2-R, 20-F-L et 20-F-R comprend une entrée d'air de refroidissement 21, autrement appelée RAC, pour « ram air cooling », en anglais.

Sur les figures, les entrées d'air RAC sont disposées dans les nacelles et le fuselage. Néanmoins, les entrées d'air RAC peuvent être installées dans les nacelles et/ou fuselage et/ou caisson de voilure , selon les dimensions de l'aéronef, telles que son envergure et/ou la longueur du fuselage, et selon l'aérodynamisme dans le fuselage.

Avantageusement, la boucle d'évacuation de chaleur est reliée au conditionnement de dihydrogène, de sorte que la chaleur issue d'un dispositif de production d'électricité contribue au conditionnement du dihydrogène avant de pénétrer dans le dispositif de production d'électricité.

Comme il ressort également des figures, la boucle de conditionnement du dihydrogène comprend un échangeur de chaleur 22 dans le fuselage 7 pour réchauffer le dihydrogène gazeux cryogénique issu de l'échangeur de chaleur par un autre fluide, de sorte que le dihydrogène gazeux ait une température adaptée à la pile à combustible en sortie d'échangeur. L'autre fluide est un liquide de refroidissement, par exemple de l'éthylène glycol (EGW pour « ethyl glycol water » en anglais), stocké dans un accumulateur 23. Sur la figure 2, un échangeur de chaleur 22-1-L dans la nacelle 6-1-L est conformé pour réchauffer le dihydrogène gazeux à destination de la pile à combustible 4-1-L ; un échangeur de chaleur 22-2-L dans la nacelle 6-2-L est conformé pour réchauffer le dihydrogène gazeux à destination de la pile à combustible 4-2-L ; un échangeur de chaleur 22-1-R dans la nacelle 6-1-R est conformé pour réchauffer le dihydrogène gazeux à destination de la pile à combustible 4-1-R ; un échangeur de chaleur 22-2-R dans la nacelle 6-2-R est conformé pour réchauffer le dihydrogène gazeux à destination de la pile à combustible 4-2-R ; un même échangeur 22-F dans le fuselage 7 est conformé pour réchauffer le dihydrogène gazeux à destination des deux piles à combustibles du fuselage, 4-F-L et 4-F-R.

On décrit maintenant le fonctionnement de l'architecture de l'aéronef 1.

Lorsque les piles à combustible en ont besoin, le dihydrogène liquide contenu à température cryogénique dans chacun des réservoirs 3-1, 3-2 est extrait du réservoir 3-1, 3-2 à destination des piles à combustibles via la boucle de conditionnement 104-1, 104-2 . Le dihydrogène issu du réservoir 3-1 peut alimenter chacune des piles à combustible 4-1-L, 4-2-L, 4-1-R, 4-2-R des nacelles 6-1-L, 6-2-L, 6-1-R, 6-2-R. Le dihydrogène issu du réservoir 3-2 peut alimenter chacune des piles à combustible 4-1-L, 4-2-L, 4-1-R, 4-2-R des nacelles 6-1-L, 6-2-L, 6-1-R, 6-2-R ainsi que les piles à combustible 4-F-L et 4-F-R du fuselage 7. D'autres arrangements/combinaisons peuvent être possibles pour améliorer la distribution d'hydrogène.

Les piles à combustible génèrent un courant électrique à destination des unités à propulsion électrique. L'unité de propulsion électrique 11-1-L est alimentée par la pile à combustible 4-1-L et/ou par la pile à combustible 4-F-L ; l'unité de propulsion électrique 11-2-L est alimentée par la pile à combustible 4-2-L et/ou par la pile à combustible 4-F-L ; l'unité de propulsion électrique 11-1-R est alimentée par la pile à combustible 4-1-R et/ou par la pile à combustible 4-F-R ; l'unité de propulsion électrique 11-2-R est alimentée par la pile à combustible 4-2-R et/ou par la pile à combustible 4-F-R. D'autres arrangements et/ou combinaisons peuvent être possibles pour produire la poussée nécessaire.

On note que l'architecture a été présentée de manière simplifiée et peut comprendre d'autres composants, en plus de ceux décrits. Notamment, soulignons que :
- chaque nacelle comprend non seulement son unité de propulsion électrique indépendante et son dispositif de production d'électricité mais aussi, avantageusement, un EES (un « end to end electrical system » en anglais, un système qui fournit de l'électricité à travers un câble) indépendant ;
- l'aéronef comprend des lignes de distribution du dihydrogène liquide, des vannes pour contrôler la circulation du dihydrogène qui ne sont pas illustrées ;
- la boîte froide comprend, en plus de l'échangeur de chaleur LH2/GHe, des composants dans sa boucle dans la boucle cryogénique tels que cryofan, vannes ....
- l'aéronef comprend également comprend un système de régulation de température (TMS pour « thermal management system » en anglais), une source d'énergie non-propulsive (NPE pour « non propulsive energy ») et des composants auxiliaires (BOP pour « balance of plant » en anglais) pour permettre aux piles à combustible de fonctionner de manière efficace, qui n'ont pas été illustrés ;
- l'accumulateur de liquide de refroidissement distribue le liquide de refroidissement à la pile à combustible, mais aussi aux autres composants tels que BOP et NPE.

Comme il ressort déjà de la description précédente, l'architecture selon la présente technologie présente de nombreux avantages, parmi lesquels :
- la disposition des piles à combustible à la fois dans les nacelles moteur et le fuselage permet une plus grande liberté d'installation tout en assurant la puissance électrique nécessaire ;
- la propulsion électrique à dihydrogène est compatible avec un moteur supraconducteur et une distribution électrique supraconductrice ;
- une réduction globale du poids du système de production d'électricité ;
- la surface occupée par les piles à combustible peut être plus grande, ce qui autorise une distribution de courant plus grande, étant donné que les contraintes d'espace sont moindres dans le fuselage ;
- une sécurité encore améliorée par le dédoublement des piles à combustible présentes à la fois dans les nacelles et dans le fuselage.

L'invention a également pour objet un procédé de répartition de la puissance électrique issue de chaque dispositif de production d'énergie du fuselage 7 à l'une ou l'autre des nacelles moteur, qui comprend une étape de distribution à l'un des nacelles lorsqu'une perte de poussée est détectée dans ce nacelle.

Des modifications et des améliorations aux mises en œuvre décrites ci-dessus de la présente invention peuvent apparaître à la personne du métier.

La description ci-dessus est illustrative au travers d'exemples plutôt que limitative. La portée de la présente invention est donc limitée uniquement par la portée des revendications ci-dessous.

## Revendications

1. Aéronef, comprenant au moins une aile munie d'au moins une nacelle (6-1-L, 6-2-L, 6-1-R, 6-2-R), et un fuselage, l'aéronef comprenant un système de production d'électricité (2) et le fuselage comprenant au moins un réservoir (3-1, 3-2) de stockage de composition de fuel pour alimenter ledit système de production d'électricité (2), ledit au moins une nacelle (6-1-L, 6-2-L, 6-1-R, 6-2-R) comprenant une unité de propulsion électrique (11-1-L, 11-2-L, 11-1-R, 11-2-R) comportant une unité de contrôle moteur (MCU) et un moteur électrique conformé pour être alimenté électriquement par le système de production d'électricité pour produire une poussée, le système de production d'électricité (2) comprenant un dispositif de production d'électricité (4-1-L, 4-2-L, 4-1-R, 4-2-R) dans ledit au moins une nacelle (6-1-L, 6-2-L, 6-1-R, 6-2-R) et un dispositif de production d'électricité (4-F-L, 4-F-R) dans ledit fuselage (7).

2. Aéronef selon la revendication précédente, dans lequel le moteur électrique est supraconducteur.

3. Aéronef selon la revendication précédente, dans lequel l'unité de contrôle (MCU) du moteur électrique supraconducteur est cryogénique.

4. Aéronef selon l'une des revendications précédentes, dans lequel chaque dispositif de production d'électricité (4-1-L, 4-2-L, 4-1-R, 4-2-R, 4-F-L, 4-F-R) est une pile à combustible, la composition de fuel étant du dihydrogène.

5. Aéronef selon la revendication précédente dans sa dépendance à la revendication 3, comprenant une liaison électrique supraconductrice pour fournir de l'électricité entre la pile à combustible et l'unité de contrôle cryogénique.

6. Aéronef selon l'une des revendications précédentes, comprenant une boucle (104-1-L, 104-2-L, 104-1-R, 104-2-R) de conditionnement de la composition de fuel en amont de l'un des dispositifs de production d'électricité, ladite boucle de conditionnement comportant un échangeur (14-1, 14-2) entre la composition de fuel et un autre fluide, dit fluide calorifique.

7. Aéronef selon l'une des revendications précédentes, comprenant une distribution électrique (15) comportant au moins un câble électrique (16-1-L, 16-2-L, 16-1-R, 16-2-R, 16-F-L-1, 16-F-L-2, 16-F-R-1, 16-F-R-2) entre le système de production d'énergie (2) et l'unité de propulsion électrique, ladite distribution électrique comportant un moyen (17) de maintien dudit câble à une température inférieure ou égale à une température cible.

8. Aéronef selon la revendication précédente, dans lequel le moyen de maintien du câble (16-1-L, 16-2-L, 16-1-R, 16-2-R, 16-F-L-1, 16-F-L-2, 16-F-R-1, 16-F-R-2) à une température inférieure ou égale à une température cible et la boucle de conditionnement de la composition de fuel sont reliés, de sorte qu'une chaleur dissipée dans le câble électrique contribue au conditionnement de la composition de fuel.

9. Aéronef selon l'une des revendications précédentes, comprenant une boucle (20-1-L, 20-2-L, 20-1-R, 20-2-R, 20-F-L, 20-F-R) d'évacuation de chaleur hors d'au moins un dispositif de production d'électricité, ladite boucle d'évacuation de chaleur comprenant une entrée d'air (RAC) et un échangeur (22-1-L, 22-2-L, 22-1-R, 22-2-R, 22-F) de chaleur entre l'air et un autre fluide, dit fluide de refroidissement.

10. Aéronef selon la revendication précédente, dans lequel la boucle d'évacuation de chaleur est reliée au boucle de conditionnement de la composition de fuel, de sorte qu'une chaleur issue d'un dispositif de production d'électricité contribue au conditionnement de la composition de fuel.

11. Aéronef selon l'une des revendications précédentes, comprenant deux nacelles, chaque nacelle comprenant une unité de propulsion électrique (EPU) comportant une unité de contrôle moteur (MCU) et un moteur électrique conformé pour être alimenté électriquement par le système de production d'électricité pour produire une poussée, et un dispositif de production d'électricité dédié à ladite unité de propulsion électrique, le fuselage comprenant au moins un dispositif de production d'électricité relié à chacune des desdites unités de propulsion électrique des deux nacelles.

12. Aéronef selon la revendication précédente, comprenant un moyen de régulation de l'alimentation électrique dudit au moins un dispositif de production d'électricité pour répartir l'alimentation électrique auxdites aux moins deux unités de propulsion électrique selon un paramètre dépendant de la poussée.
